# EUROPÄISCHE PATENTSCHRIFT

(11) **EP 4 019 381 B1**
(45) Veröffentlichungstag und Bekanntmachung des Hinweises auf die Patenterteilung: **02.08.2023**
(21) Anmeldenummer: 20216396.0
(22) Anmeldetag: 22.12.2020
(51) Int. Cl.: B62K 25/08, B62K 3/00, B62K 21/20, B62K 15/00, B62K 25/04

(54) **LENKSTANGE FÜR ZWEIRÄDER**
STEERING ROD FOR TWO-WHEELED VEHICLE
BARRE DE DIRECTION POUR VÉHICULE À DEUX ROUES

(43) Veröffentlichungstag der Anmeldung: 29.06.2022
(73) Patentinhaber: Driveman GmbH, 58339 Breckerfeld (DE)
(72) Erfinder: Schnippering, Axel, 58553 Halver (DE); Wiegand, Andreas, 58553 Halver (DE)
(74) Vertreter: Patentanwälte Dörner & Kötter PartG mbB

(56) Entgegenhaltungen:
- EP-A2- 1 174 335
- CN-A- 106 005 189
- CN-Y- 2 435 315
- CN-Y- 2 440 740
- DE-A1-102006 008 992
- JP-A- H0 699 874
- JP-A- H09 240 553
- US-A- 3 083 038

## Beschreibung

Die Erfindung betrifft eine Lenkstange für ein Zweirad, insbesondere einen Elektroroller, nach dem Oberbegriff des Patentanspruchs 1.

Mit einem Elektroantrieb versehene Roller, auch als E-Scooter bezeichnet, erfreuen sich zunehmender Beliebtheit. Diese Fahrzeuge sind kompakt ausgestaltet und durch die Möglichkeit des Umlegens der Längssäule platzsparend verstaubar. Die Vorteile dieser elektrisch angetriebenen Fahrzeuge gegenüber Kraftfahrzeugen sind im stadtnahen Bereich deutlich erkennbar. Sie sind umweltfreundlich und benötigen aufgrund ihres geringen Eigengewichtes wenig Energie. Außerdem ist ihre benötigte Stellfläche um ein Vielfaches kleiner und sie sind aufgrund ihrer Zusammenfaltbarkeit einfach zu handhaben. Roller der vorgenannten Art sind beispielsweise in der EP 2 425 989 A1 beschrieben.

Um auch auf holprigen Wegen ein komfortables Fahren zu ermöglichen, ist es bekannt, die mit dem Vorderrad verbundene Lenkstange eines Elektrorollers mit einer Federung zu versehen. Hierzu sind beispielsweise zwei Druckfedern beidseitig des Lenkers angeordnet, oder es ist eine Druckfeder den unteren, dem Vorderrad zugewandten Bereich des Lenkers umgebend angeordnet. Weiterhin ist bekannt, außen zwischen Rad und Lenker einen, oder auch zwei Stoßdämpfer anzuordnen, um einem Überschwingen des Elektrorollers entgegenzuwirken.

Elektroroller zeichnen sich regelmäßig dadurch aus, dass sie klappbar und möglichst platzsparend und handlich ausgebildet sind. Um das Packmaß möglichst gering zu halten, sind beispielsweise die Lenkergriffe einklappbar ausgeführt.

Nachteilig an den vorbekannten Federungen von Elektrorollern ist, dass die angeordneten Federn und Dämpfer zusätzlichen Raum beanspruchen, wodurch das Packmaß beeinträchtigt ist. Nicht zuletzt können sich die zusätzlichen Bauteile auch optisch negativ auswirken.

Hier will die Erfindung Abhilfe schaffen. Der Erfindung liegt die Aufgabe zugrunde, eine Lenkstange für ein Zweirad, insbesondere einen Elektroroller bereitzustellen, die mit einer Federung mit Dämpfung versehen ist und dabei kompakt ausgebildet ist. Gemäß der Erfindung wird diese Aufgabe durch eine Lenkstange mit den Merkmalen des kennzeichnenden Teils des Patentanspruchs 1 gelöst. Das zum Stand der Technik gehörende Dokument US 3,083,038 A offenbart die Merkmale der Präambel von Anspruch 1.

Mit der Erfindung ist eine Lenkstange für ein Zweirad, insbesondere einen Elektroroller bereitgestellt, die mit einer Federung mit Dämpfung versehen ist und dabei kompakt ausgebildet ist. Dadurch, dass die Federung durch eine Druckfeder gebildet ist, wobei die Druckfeder und der Stoßdämpfer innerhalb der Lenkstange angeordnet sind, ist das Außenmaß der Lenkstange nicht beeinträchtigt. Insbesondere störende, seitlich der Lenkstange angebaute Federn und/oder Stoßdämpfer sind nicht vorhanden. Bevorzugt ist die Federung durch genau eine Druckfeder gebildet.

Weiterhin umfasst die Lenkstange ein Standrohr, in dem die Druckfeder zwischen einer ersten, verschiebbaren Federaufnahme und einer zweiten, ortsfesten Federaufnahme vorgespannt positioniert ist, wobei die erste Federaufnahme mit einem aus dem Standrohr herausragenden Tauchrohr verbunden ist und die zweite Federaufnahme mit einer außen an dem Standrohr angeordneten Stellmutter verbunden ist, über welche die axiale Position der zweiten Federaufnahme innerhalb des Standrohrs verstellbar ist. Hierdurch ist eine Verstellung der Federvorspannung ermöglicht. Die Angabe "ortsfest" ist in diesem Zusammenhang als Zustand im Betrieb zu verstehen. Die zweite Federaufnahme ist folglich insoweit ortsfest, solange ihre Position nicht gerade zur Verstellung der Federvorspannung verändert wird. Es sind folglich unterschiedliche, ortsfeste Positionen der zweiten Federaufnahme möglich.

In weiterer Ausgestaltung der Erfindung ist die zweite Federaufnahme durch einen becherartigen Federkorb gebildet, in dem die Druckfeder angeordnet ist und dessen Wandung sich über einen wesentlichen Teil der Druckfeder erstreckt. Hierdurch ist eine sehr kompakte Anordnung ermöglicht. Durch den becherförmig ausgebildeten Federkorb kann die Stellmutter weiter in Richtung Tauchrohr positioniert werden, wodurch außen an dem Standrohr ausreichend Platz zur Befestigung einer Rahmenstrebe bereitgestellt werden kann, ohne dass das Standrohr länger zu dimensionieren ist. Aus Stabilitätsgründen ist die Rahmenstrebe häufig gabelförmig ausgebildet und benötigt zwei beabstandet zueinander angeordnete Befestigungsflächen.

Die becherförmige Gestaltung des Federkorbes ist nicht auf eine geschlossene Mantelfläche beschränkt, sie kann gleichermaßen auch maschen- oder korbförmig ausgebildet sein. Wesentlich ist ein angeordneter Boden, an den sich eine einen Hohlraum begrenzende, nicht zwingend geschlossene Wandung anschließt, die bevorzugt hohlzylindrisch ausgebildet ist. Die Höhe der Wandung des Federkorbes bestimmt den Abstand des Stellrings und damit auch der Stellschraube zur Anlagefläche der Druckfeder.

Nach der Erfindung liegt die Stellmutter an einem Stellring, der das Standrohr umfasst und der mit der zweiten Federaufnahme verbunden ist. Bevorzugt ist der Stellring über Bolzen mit der verschiebbaren Federaufnahme verbunden, die durch jeweils ein in das Standrohr eingebrachtes Langloch geführt sind. Hierdurch ist eine einfache Verstellung der Federvorspannung durch Drehung der Stellmutter, die eine axiale Verschiebung des Stellrings bewirkt, ermöglicht.

In Ausgestaltung der Erfindung sind der Stellring und/oder die Stellmutter derart ausgebildet, dass die Langlöcher in jeder möglichen Position des Stellrings verdeckt ist. Hierdurch ist einem Eindringen von Schmutz durch die Langlöcher in das Standrohr entgegengewirkt.

In weiterer Ausgestaltung der Erfindung umfasst der Stoßdämpfer einen in dem Standrohr festgelegten Zylinder mit einem darin verschiebbaren Kolben, dessen Kolbenstange mit einem Verbindungsrohr oder einer Verbindungsstange verbunden ist, die durch die Druckfeder geführt und endseitig mit dem Tauchrohr verbunden ist. Hierdurch ist eine Verbindung des Tauchrohrs mit dem Kolben des Stoßdämpfers erzielt.

In Weiterbildung der Erfindung weist das Tauchrohr innen einen Absatz auf, durch den eine Schraube geführt ist, über die das Tauchrohr mit dem Verbindungsrohr oder der Verbindungsstange verschraubt ist. Hierdurch ist eine lösbare Verbindung zwischen dem Verbindungsrohr oder der Verbindungsstange und dem Tauchrohr erzielt, wobei eine einfache Montage ermöglicht ist.

In Ausgestaltung der Erfindung erstreckt sich das Verbindungsrohr oder die Verbindungsstange durch die Druckfeder und den Federkorb, der hierzu bodenseitig eine zentrische Durchführung aufweist. Hierdurch ist eine gute Führung der Druckfeder und des Führungskorbes erzielt.

In weiterer Ausgestaltung der Erfindung ist das Verbindungsrohr oder die Verbindungsstange endseitig in einer zwischen Federkorb und Zylinder in dem Standrohr befestigten Lagerbuchse gelagert. Hierdurch ist eine stabile Führung des Verbindungsrohrs, bzw. der Verbindungsstange erzielt. Vorzugsweise ist die Lagerbuchse durch einen durch die Wandung des Standrohres geführten Zylinderstift in ihrer Position fixiert.

In Weiterbildung der Erfindung ist die erste Federaufnahme durch eine Druckscheibe gebildet, die an dem Tauchrohr anliegt. Dabei weist die Scheibe vorteilhaft eine Bohrung auf, durch die das Führungsrohr geführt ist.

Bevorzugt ist das Tauchrohr als Keilwelle ausgeführt, wobei in dem Standrohr endseitig eine Keilnabe angeordnet ist, durch die das Tauchrohr in dem Standrohr verschiebbar gelagert ist. Durch die Keilwelle ist eine drehsichere Verbindung mit dem Vorderrad des Zweirades ermöglicht.

In Ausgestaltung der Erfindung ist eine gabelförmige Rahmenstrebe eines Zweirades vorhanden, die über zwei beabstandet zueinander angeordnete Schellen derart an dem Standrohr drehbar befestigt ist, dass die Stellmutter zwischen den Schellen beabstandet zu diesen positioniert ist. Hierdurch ist eine kompakte Bauweise bei gleichzeitig guter Zugänglichkeit der Stellmutter erzielt. Durch die gabelförmige Gestaltung der Rahmenstrebe weist diese zwischen den Schellen eine Einwölbung auf, die einen ausreichenden Raum zur Betätigung der Stellmutter bereitstellt.

In weiterer Ausgestaltung der Erfindung ist ein Gehäuse das Standrohr verlängernd mit diesem verbunden, in welchem der Zylinder des Stoßdämpfers befestigt ist, der mit dem Gehäuse eine Stoßdämpfereinheit bildet. Hierdurch ist der Einsatz einer vorgefertigten Stoßdämpfereinheit ermöglicht, die lediglich mit dem Standrohr zu verbinden ist, wodurch die Montage vereinfacht ist.

Gegenstand der Erfindung ist weiterhin ein Zweirad, insbesondere ein Elektroroller, der eine Lenkstange der vorstehenden Art aufweist.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

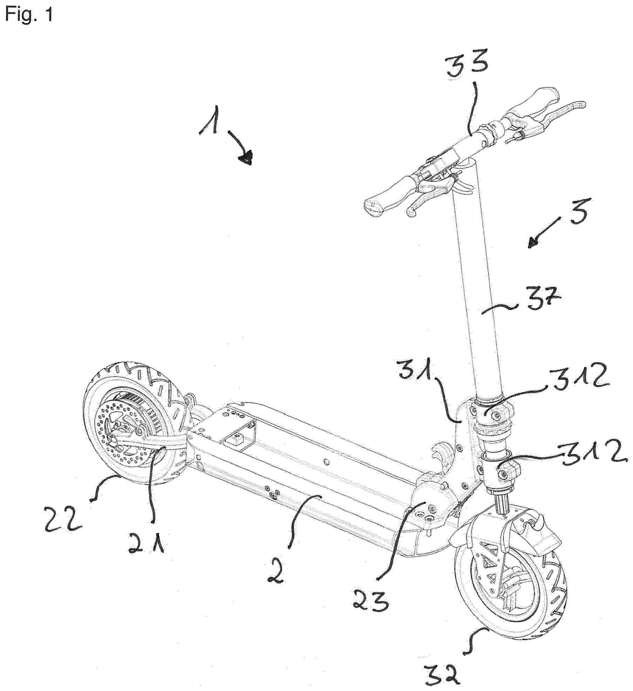

- Figur 1: die räumliche Darstellung eines Elektrorollers;

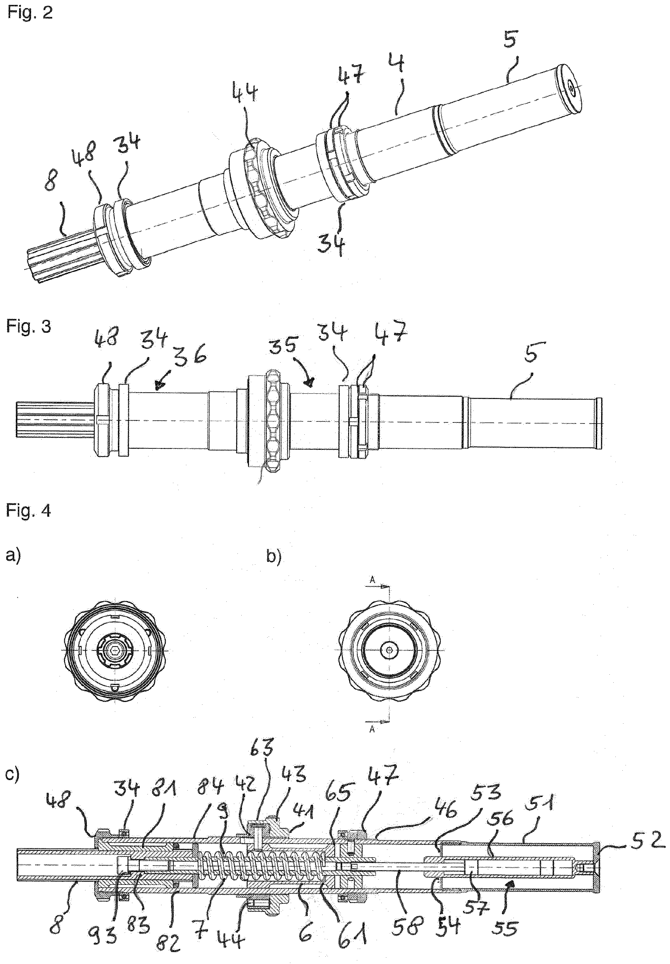

- Figur 2: die räumliche Darstellung der Lenkstange des Elektrorollers aus Figur 1;
- Figur 3: die Darstellung der Lenkstange aus Figur 2 in der Seitenansicht;
- Figur 4: die Darstellung der Lenkstange aus Figur 2
a) in der Ansicht von unten;
b) in der Draufsicht;
c) im Schnitt A-A;
- Figur 5: die räumliche Darstellung der Lenkstange des Elektrorollers aus Figur 1 mit schematisch dargestellter Rahmenstrebe;
- Figur 6: die Lenkstange aus Figur 5 in einer Seitenansicht;

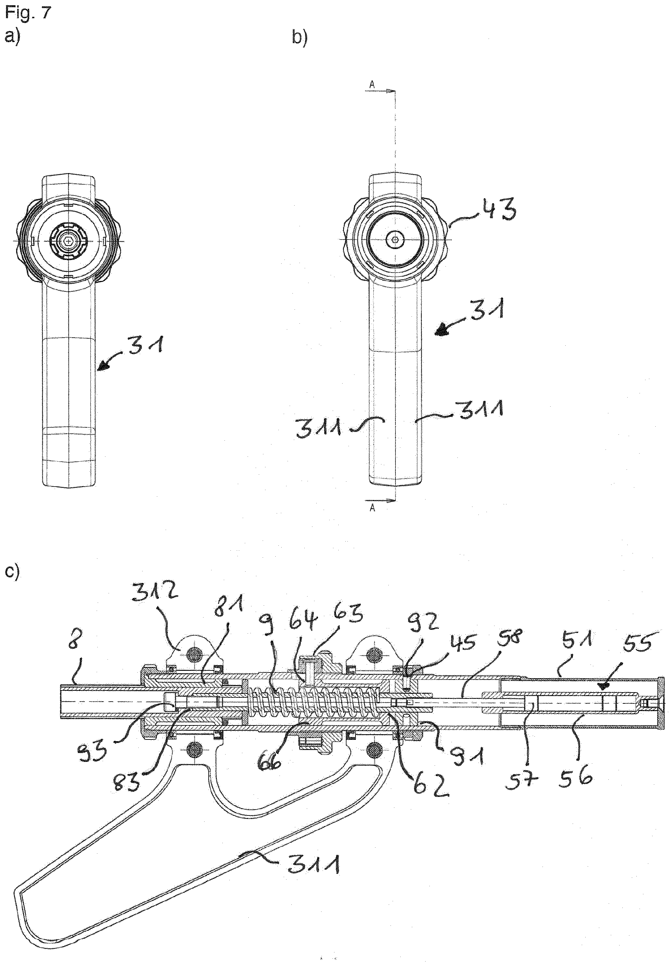

- Figur 7: die schematische Darstellung der Lenkstange aus Figur 5
a) in der Ansicht von unten;
b) in der Draufsicht;
c) im Schnitt A-A.

Der als Ausführungsbeispiel gewählte Elektroroller 1 umfasst ein Trittelement 2, das in bekannter Art und Weise über eine arretierbare Schwenkvorrichtung 23 mit einer Rahmenstrebe 31 verbunden ist, in der eine Lenkstange 3 drehbar gelagert ist, die an einer Seite mit einem Vorderrad 32 sowie an der diesen gegenüberliegenden Seite mit einem einklappbar ausgebildeten Lenker 33 versehen ist. Das Trittelement 2 ist heckseitig über eine Hinterradschwinge 21 mit einem Hinterrad 22 verbunden. Hinterrad 22 und Vorderrad 32 sind mit einem - nicht dargestellten - Elektroantrieb verbunden. Die Lenkstange 3 kann über die arretierbare Schwenkvorrichtung 23 in eine im Wesentlichen zum Trittelement 2 parallele Position verschwenkt werden.

Die Lenkstange 3 umfasst ein Standrohr 4, das an einem Ende in das hohlzylindrische Gehäuse 51 einer mit diesem verbundenen Stoßdämpfereinheit 5 übergeht. In dem Standrohr 4 ist ein Federkorb 6 angeordnet, der eine Schraubenfeder 7 aufnimmt, die an einer Druckscheibe 84 anliegt, die an einem Tauchrohr 8 angeordnet ist. In das Tauchrohr 8 ist koaxial ein Endabschnitt eines Verbindungsrohrs 9 eingebracht, das über eine Schraube 93 mit dem Tauchrohr 8 verbunden ist. Das Verbindungsrohr 9 ist durch die Druckscheibe 84, die Schraubenfeder 7 und den Boden 61 des Federkorbs 6 geführt, der hierzu mit einer zentrischen Durchführung 62 versehen ist. Dabei ist das Verbindungsrohr 9 mit seinem gegenüberliegenden Endabschnitt in einer Lagerbuchse 92 verschiebbar gelagert. Mit seinem dem Tauchrohr 8 gegenüberliegende Ende ist das Verbindungsrohr 9 mit der Kolbenstange 58 der Stoßdämpfereinheit 5 verbunden, die in das Verbindungsrohr 9 eingeschraubt ist.

Das Standrohr 4 ist als hohlzylindrisches Metallrohr ausgebildet und weist ein erstes Außengewinde 41 auf, an das sich drei jeweils um 120 Grad versetzt zueinander umlaufend angeordnete Langlöcher 42 anschließen. Auf das erste Außengewinde 41 ist eine Stellmutter 43 aufgeschraubt, die eine Ringnut aufweist, an der ein Stellring 44 anliegt. Durch den Stellring 44 sind um jeweils 120 Grad zueinander versetzt drei Bolzen 63 geführt, die jeweils durch ein Langloch 42 hindurchragen und in jeweils eine hierzu in dem Federkorb 6 angeordnete Bohrung 64 eingreifen. Der Stellring 44 ist über die Bolzen 63 formschlüssig mit dem Federkorb 6 verbunden, der so über den an der Stellmutter 43 anliegenden Stellring 44 verschiebbar ist. Durch die an dem Boden 61 des Federkorbes 6 anliegende, vorgespannte Schraubenfeder 7 ist der Stellring 44 über die Bolzen 63 stets an der Stellmutter 43 angedrückt.

Axial beabstandet zu den Langlöchern 42 sind auf ihrer der Stoßdämpfereinheit zugewandten Seite drei Bohrungen 45 in das Standrohr 4 eingebracht, durch die jeweils ein Zylinderstift 92 geführt ist, der in eine hierzu in der Lagerbuchse 91 vorhandene radiale Bohrung 92 eingreift. Durch die Zylinderstifte 92 ist die Lagerbuchse 91 in dem Standrohr 4 fixiert. Im Bereich der Bohrungen 45 ist an dem Standrohr 4 ein zweites Außengewinde 46 angeordnet, auf das zwei Kontermuttern 47 aufgeschraubt sind. Die Kontermuttern 47 dienen der seitlichen Anlage eines Kugellagers 33, über welches das Standrohr 4 drehbar an der Rahmenstrebe 31 gelagert ist.

An seinem der Stoßdämpfereinheit 5 gegenüberliegenden Ende ist das Standrohr 4 über einen Deckel 48 verschlossen, der auf das Standrohr 4 aufgeschraubt ist und durch den das Tauchrohr 8 geführt ist. Innerhalb des Standrohrs 4 liegt an dem Deckel 48 eine Keilnabe 81 an, die endseitig umlaufend eine radial auskragende Verzahnung aufweist, die in eine stirnseitig in das Standrohr 4 eingebrachte Verzahnung eingreift, wodurch die Keilnabe 81 drehfest fixiert ist. Im Ausführungsbeispiel ist die Verzahnung der Keilnabe 81 in Form von drei um 120 Grad versetzt zueinander ausgebildeten, radial auskragenden Stegen ausgebildet, die in drei versetzt zueinander stirnseitig in das Standrohr 4 eingebrachte Nuten eingreifen, durch welche die Verzahnung des Standrohres 4 gebildet ist. An ihrer dem Deckel 48 abgewandten Seite ist die Keilnabe 81 gegenüber dem Standrohr 4 und den Tauchrohr 8 über einen O-Ring 82 abgedichtet.

Die Stoßdämpfereinheit 5 umfasst ein hohlzylindrisches Gehäuse 51, das einen Boden 52 aufweist und das auf seiner dem Boden 52 gegenüberliegenden Seite über eine Kappe 53 verschlossen ist. Die Kappe 53 ist mit einem Außengewinde versehen, über das sie in ein endseitig in dem Standrohr 4 vorhandenes Innengewinde eingeschraubt ist. Zentrisch ist die Kappe 53 mit einer Durchführung 54 versehen, durch die der Zylinder 56 eines Stoßdämpfers 55 geführt ist, der an dem Boden 52 des Gehäuses 51 anliegt und mit diesem verschraubt ist. Die aus dem Zylinder 56 austretende Kolbenstange 58 des Kolbens 57 des Stoßdämpfers 55 weist an ihrem freien Ende ein Außengewinde auf, mit dem sie in ein in dem Verbindungsrohr 9 endseitig vorhandenes Innengewinde eingeschraubt ist.

Der Federkorb 6 ist im Wesentlichen becherförmig ausgebildet und weist einen Boden 61 auf, der zentrisch mit einer Durchführung 64 versehen ist, durch den das Verbindungsrohr 9 geführt ist. Der Boden 61 ragt über die Wand des Federkorbs 6 hinaus, wodurch ein erster umlaufender Kragen 65 gebildet ist. An seinem dem Boden 61 gegenüberliegenden Ende weist der Federkorb 6 einen zweiten umlaufenden Kragen 66 auf, der mit Bohrungen 62 zum Eingriff der Bolzen 63 versehen ist, über die der Federkorb 6 mit dem Stellring 44 verbunden ist. Der Außendurchmesser der Kragen 65, 66 entspricht im Wesentlichen dem Innendurchmesser des Standrohres 4, an dem sie anliegen.

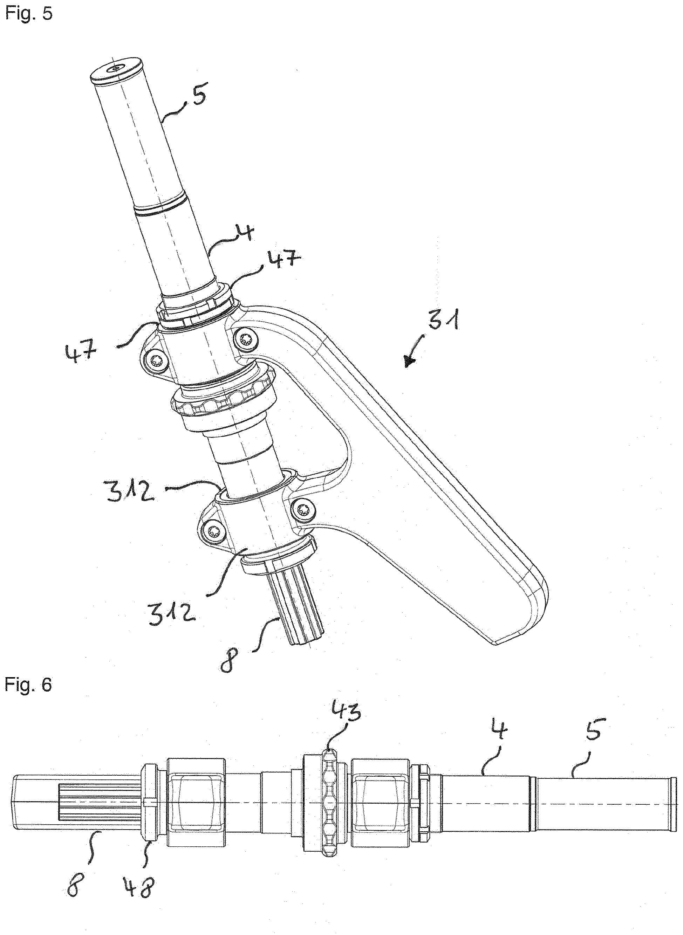

Im Ausführungsbeispiel ist das Standrohr 4 an einer gabelartig ausgebildeten Rahmenstrebe 31 drehbar gelagert. Die Rahmenstrebe 31 ist aus zwei Hälften 311 gebildet, die zwei gegenüberliegend angeordnete Schellenhälften 312 aufweisen, welche gegenüberliegend an jeweils einer Befestigungsstelle 35, 36 an das Standrohr 4 dieses umgreifend angelegt und miteinander verschraubt sind. Dabei befindet sind eine erste Befestigungsstelle 35 zwischen den Kontermuttern 47 und der Stellschraube 43 und die zweite Befestigungsstelle 36 an seinem dem Deckel 48 zugewandten Ende des Standrohres 4. Zur drehbaren Lagerung des Standrohres 4 sind die durch die Schellenhälften 312 gebildeten Befestigungsschellen jeweils über ein Kugellager 33 gelagert. An der ersten Befestigungsstelle 35 liegt das Kugellager an den Kontermuttern 47 an, an der zweiten Befestigungsstelle 36 liegt das Kugellager an dem Deckel 48 an. Wie aus Figur 5 ersichtlich, bildet die Einbuchtung der gabelartig ausgebildeten Rahmenstrebe einen ausreichenden Raum zur Betätigung der zwischen den Befestigungsstellen 35, 36 angeordneten Stellmutter zur Einstellung der Vorspannung der Schraubenfeder 7.

## Patentansprüche

1. Lenkstange für ein Zweirad, insbesondere einen Elektroroller, die zur Abfederung von Stößen mit einer Federung und einem Stoßdämpfer verbunden ist, wobei die Federung durch eine Druckfeder gebildet ist, wobei die Druckfeder und der Stoßdämpfer (55) innerhalb der Lenkstange (3) angeordnet sind, wobei die Lenkstange ein Standrohr (4) umfasst, in dem die Druckfeder zwischen einer ersten verschiebbaren Federaufnahme und einer zweiten ortsfesten Federaufnahme vorgespannt positioniert ist, wobei die erste Federaufnahme mit einem aus dem Standrohr (4) herausragenden Tauchrohr (8) verbunden ist und die zweite Federaufnahme mit einer außen an dem Standrohr (4) angeordneten Stellmutter (43) verbunden ist, über welche die axiale Position der zweiten Federaufnahme innerhalb des Standrohrs (4) verstellbar ist, **dadurch gekennzeichnet, dass** die Stellmutter (43) an einem Stellring (44) anliegt, der das Standrohr (4) umfasst und der mit der zweiten Federaufnahme verbunden ist.

2. Lenkstange nach Anspruch 1, **dadurch gekennzeichnet, dass** die zweite Federaufnahme durch einen becherförmigen Federkorb (6) gebildet ist, in dem die Druckfeder angeordnet ist.

3. Lenkstange nach Anspruch 1 oder 2, **dadurch gekennzeichnet, dass** der Stellring (44) über Bolzen (63) mit der verschiebbaren Federaufnahme verbunden ist, die durch jeweils ein in das Standrohr (4) eingebrachtes Langloch geführt sind.

4. Lenkstange nach Anspruch 3, **dadurch gekennzeichnet, dass** der Stellring (44) und/oder die Stellmutter (43) derart ausgebildet sind, dass die Langlöcher in jeder möglichen Position des Stellrings (44) verdeckt sind.

5. Lenkstange nach einem der Ansprüche 1 bis 4, **dadurch gekennzeichnet, dass** der Stoßdämpfer (55) einen in dem Standrohr (4) festgelegten Zylinder (56) mit einem darin verschiebbaren Kolben (57) umfasst, dessen Kolbenstange (58) mit einem Verbindungsrohr (9) oder einer Verbindungsstange verbunden ist, die durch die Druckfeder geführt und endseitig mit dem Tauchrohr (8) verbunden ist.

6. Lenkstange nach Anspruch 5, **dadurch gekennzeichnet, dass** das Tauchrohr (8) innen einen Absatz (83) aufweist, durch den eine Schraube (93) geführt ist, über die das Tauchrohr (8) mit dem Verbindungsrohr (9) oder der Verbindungsstange verschraubt ist.

7. Lenkstange nach Anspruch 6, **dadurch gekennzeichnet, dass** das Verbindungsrohr (9) bzw. die Verbindungsstange sich durch die Druckfeder und den Federkorb (6) erstreckt, der hierzu bodenseitig eine zentrische Durchführung (62) aufweist.

8. Lenkstange nach Anspruch 7, **dadurch gekennzeichnet, dass** das Verbindungsrohr (9) bzw. die Verbindungsstange endseitig in einer zwischen Federkorb (6) und Zylinder (56) in dem Standrohr (4) befestigten Lagerbuchse (91) gelagert ist.

9. Lenkstange nach einem der Ansprüche 1 bis 8 **dadurch gekennzeichnet, dass** die erste Federaufnahme durch eine Druckscheibe (84) gebildet ist, die an dem Tauchrohr (8) anliegt.

10. Lenkstange nach einem der Ansprüche 1 bis 9 **dadurch gekennzeichnet, dass** das Tauchrohr (8) als Keilwelle ausgeführt ist, wobei in dem Standrohr (4) endseitig eine Keilnabe (81) angeordnet ist, durch die das Tauchrohr (8) in dem Standrohr (4) verschiebbar gelagert ist.

11. Lenkstange nach einem der Ansprüche 1 bis 10, **dadurch gekennzeichnet, dass** eine gabelförmige Rahmenstrebe (31) eines Zweirades vorhanden ist, die über zwei beabstandet zueinander angeordnete Schellen derart an dem Standrohr (4) drehbar befestigt ist, dass die Stellmutter (43) zwischen den Schellen positioniert ist.

12. Lenkstange nach einem der Ansprüche 5 bis 11, **dadurch gekennzeichnet, dass** ein Gehäuse (51) das Standrohr (4) verlängernd mit diesem verbunden ist, in welchem der Zylinder (56) des Stoßdämpfers (55) befestigt ist, der mit dem Gehäuse (51) eine Stoßdämpfereinheit (5) bildet.

13. Zweirad, insbesondere Elektroroller (1), mit einer Lenkstange (3) nach einem der vorgenannten Ansprüche.

## Claims

1. Steering rod for a two-wheeled vehicle, in particular an electric scooter, which is connected for shock absorption to a suspension and a shock absorber, wherein the suspension is formed by a compression spring, wherein the compression spring and the shock absorber (55) are arranged inside the steering rod (3), wherein the steering rod comprises a standpipe (4), in which the compression spring is positioned in a pretensioned manner between a first displaceable spring receptacle and a second stationary spring receptacle, wherein the first spring receptacle is connected to a dip tube (8) projecting from the standpipe (4) and the second spring receptacle is connected to an adjusting nut (43) arranged on the outside of the standpipe (4), via which adjusting nut the axial position of the second spring receptacle is adjustable within the standpipe (4), **characterised in that** the adjusting nut (43) rests against an adjusting ring (44), which encompasses the standpipe (4) and which is connected to the second spring receptacle.

2. Steering rod according to claim 1, **characterised in that** the second spring receptacle is formed by a cup-shaped spring cage (6), in which the compression spring is arranged.

3. Steering rod according to claim 1 or 2, **characterised in that** the adjusting ring (44) is connected to the displaceable spring receptacle via bolts (63), which are each guided through an elongated hole inserted in the standpipe (4).

4. Steering rod according to claim 3, **characterised in that** the adjusting ring (44) and/or the adjusting nut (43) are designed in such a manner that the elongated holes are covered in every possible position of the adjusting ring (44).

5. Steering rod according to one of claims 1 to 4, **characterised in that** the shock absorber (55) comprises a cylinder (56) fixed in the standpipe (4) with a piston (57) displaceable therein, the piston rod (58) of which is connected to a connecting tube (9) or a connecting rod, which is guided through the compression spring and is connected at the end to the dip tube (8).

6. Steering rod according to claim 5, **characterised in that** the dip tube (8) has a shoulder (83) on the inside, through which a screw (93) is guided, via which the dip tube (8) is screwed to the connecting tube (9) or the connecting rod.

7. Steering rod according to claim 6, **characterised in that** the connecting tube (9) or the connecting rod extends through the compression spring and the spring cage (6), which has a central lead-through (62) on the base side for this purpose.

8. Steering rod according to claim 7, **characterised in that** the connecting tube (9) or the connecting rod is mounted at the end in a bearing bush (91) fastened between the spring cage (6) and the cylinder (56) in the standpipe (4).

9. Steering rod according to one of claims 1 to 8, **characterised in that** the first spring receptacle is formed by a pressure disc (84), which rests against the dip tube (8).

10. Steering rod according to one of claims 1 to 9, **characterised in that** the dip tube (8) is designed as a splined shaft, wherein a splined hub (81) is arranged in the end of the standpipe (4), by means of which the dip tube (8) is displaceably mounted in the standpipe (4).

11. Steering rod according to one of claims 1 to 10, **characterised in that** a forkshaped frame strut (31) of a two-wheeler is provided, which is rotatably mounted to the standpipe (4) via two spaced apart clamps in such a manner that the adjusting nut (43) is positioned between the clamps.

12. Steering rod according to one of claims 5 to 11, **characterised in that** a housing (51) is connected to the standpipe (4) so as to extend it, in which the cylinder (56) of the shock absorber (55) is fixed, which forms a shock absorber unit (5) with the housing (51).

13. Two-wheeled vehicle, in particular electric scooter (1), with a steering rod (3) according to one of the previous claims.

## Revendications

1. Tube de direction pour deux-roues, en particulier pour une trottinette électrique, relié avec une suspension et un amortisseur pour atténuer les chocs, sachant que la suspension est formée par un ressort compressible, sachant que le ressort compressible et l'amortisseur (55) sont disposés à l'intérieur du tube de direction (3), sachant que le tube de direction comprend un tube vertical (4) dans lequel le ressort compressible est positionné précontraint entre un premier logement, coulissant, de ressort et un deuxième logement de ressort immobile, sachant que le premier logement de ressort est relié à un tube plongeant (8) faisant saillie hors du tube vertical (4) et que le deuxième logement de ressort est relié à un écrou d'ajustement (43) disposé à l'extérieur contre le tube vertical (4), écrou via lequel il est possible d'ajuster la position axiale du deuxième logement de ressort à l'intérieur du tube vertical (4), **caractérisé en ce que** l'écrou d'ajustement (43) applique contre une bague d'ajustement (44) qui ceinture le tube vertical (4) et qui est reliée avec le deuxième logement de ressort.

2. Tube de direction selon la revendication 1, **caractérisé en ce que** le deuxième logement de ressort est formé par un panier (6) en forme de gobelet dans lequel est disposé le ressort compressible.

3. Tube de direction selon la revendication 1 ou 2, **caractérisé en ce que** la bague d'ajustement (44) est reliée via des boulons (63) avec le logement de ressort coulissant, boulons qui passent chacun à travers un trou oblong ménagé dans le tube vertical (4).

4. Tube de direction selon la revendication 3, **caractérisé en ce que** la bague d'ajustement (44) et/ou l'écrou d'ajustement (43) sont configurés de telle sorte que les trous oblongs soient recouverts dans toute position possible de la bague d'ajustement (44).

5. Dispositif selon l'une des revendications 1 à 4, **caractérisé en ce que** l'amortisseur (55) comprend un cylindre (56) fixé dans le tube vertical (4) et contenant un piston (57) qui coulisse dedans, piston dont la tige (58) est reliée avec un tube de liaison (9) ou une barre de liaison, lequel/laquelle passe à travers le ressort compressible et est relié(e) à l'extrémité avec le tube plongeant (8).

6. Tube de direction selon la revendication 5, **caractérisé en ce que** le tube plongeant (8) présente à l'intérieur un épaulement (83) à travers lequel passe une vis (93), vis via laquelle le tube plongeant (8) est vissé avec le tube de liaison (9) ou la barre de liaison.

7. Tube de direction selon la revendication 6, **caractérisé en ce que** le tube de liaison (9) ou la barre de liaison s'étend à travers le ressort compressible et le panier (6) à ressort, panier qui présente à cette fin sur son fond un orifice de passage (62) centré.

8. Tube de direction selon la revendication 7, **caractérisé en ce que** le tube de liaison (9) ou la barre de liaison est en appui, à l'extrémité, dans une douille palier (91) fixée entre le panier (6) à ressort et le cylindre (56) dans le tube vertical (4).

9. Tube de direction selon l'une des revendications 1 à 8, **caractérisé en ce que** le premier logement de ressort est formé par une rondelle compressible (84) qui applique contre le tube plongeant (8).

10. Tube de direction selon l'une des revendications 1 à 9, **caractérisé en ce que** le tube plongeant (8) est réalisé sous forme d'arbre cannelé, sachant qu'un moyeu cannelé (81) est disposé à l'extrémité dans le tube vertical (4), moyeu à travers lequel le tube plongeant (8) est en appui coulissant dans le tube vertical (4).

11. Tube de direction selon l'une des revendications 1 à 10, **caractérisé en ce qu'**est présent un renfort (31) de cadre en forme de fourche pour un deux-roues, renfort qui est fixé contre le tube vertical (4), tout en pouvant tourner, via deux colliers disposés distants l'un de l'autre, de sorte que l'écrou d'ajustement (43) est positionné entre les colliers.

12. Tube de direction selon l'une des revendications 5 à 11, **caractérisé en ce qu'**un boîtier (51) prolongeant le tube vertical (4) est relié à ce dernier, boîtier dans lequel est fixé le cylindre (56) de l'amortisseur (55), amortisseur qui forme un ensemble amortisseur (5) avec le boîtier (51).

13. Deux-roues, notamment trottinette électrique (1), comprenant un tube de direction (3) selon l'une des revendications précédentes.
